# EUROPÄISCHE PATENTSCHRIFT

(11) **EP 2 838 868 B1**
(45) Veröffentlichungstag und Bekanntmachung des Hinweises auf die Patenterteilung: **07.09.2016**
(21) Anmeldenummer: 13779012.7
(22) Anmeldetag: 08.04.2013
(51) Int. Cl.: C04B 38/02, C01F 7/02, C04B 28/26

(54) **VERFAHREN ZUR BILDUNG EINES SCHNELL ERHÄRTENDEN, ANORGANISCHEN SCHAUMS**
METHOD FOR FORMING A QUICKLY HARDENING, INORGANIC FOAM
PROCÉDÉ POUR LA FORMATION D'UNE MOUSSE INORGANIQUE À PRISE RAPIDE

(30) Priorität: 16.04.2012 DE 102012007396
(43) Veröffentlichungstag der Anmeldung: 25.02.2015
(73) Patentinhaber: Cast Aluminium Industries, Dubai (AE)
(72) Erfinder: FEIGE, Reinhard, 58332 Schwelm (DE); AHMED, Waheed, Rahim Yar Khan (PK); NAZIR, Muhammad Kashif, Multan (PK)
(74) Vertreter: Flaccus, Rolf-Dieter
(86) Internationale Anmeldenummer: PCT/IB2013/000869
(87) Internationale Veröffentlichungsnummer: WO 2013/156852

(56) Entgegenhaltungen:
- EP-A1- 1 440 937
- WO-A2-2005/012207
- US-A- 4 814 300

## Beschreibung

Die Erfindung betrifft ein Verfahren zur Bildung eines schnell erhärtenden anorganischen Schaums, basierend auf der Reaktion von 2 Komponenten:
1) einer festen Komponente in Form eines reaktiven Pulvers, das gleichzeitig sowohl gerüstbildende als auch porenbildende Eigenschaften hat, und
2) einer flüssigen Komponente in Form einer alkalischen Aktivierungslösung. Die Erfindung betrifft ferner ein reaktives Pulver zur Bildung eines schnell erhärtenden, anorganischen Schaums durch Reaktion mit einer alkalischen Aktivierungslösung.

Anorganischer Schaum (Mineralschaum) wird als thermisch isolierender, feuerbeständiger Leichtbaustoff eingesetzt. Eine schnelle Erhärtung des Schaums ist von Vorteil beim Auffüllen von Mauerwerkshohlräumen, bei der Herstellung von Isolierplatten und bei Reparaturen der thermischen Isolierung von Industrieöfen. Vorteilhaft für die Verarbeitung auf Baustellen ist eine Rezeptur, bei der möglichst nur 2 Komponenten miteinander gemischt werden müssen. Für thermische Isolierungen von Industrieöfen muss der anorganische Schaum aus Bestandteilen aufgebaut sein, die eine hohe Temperaturbeständigkeit bieten.

Es ist bekannt, anorganischen Schaum in Form eines Geopolymerschaums herzustellen durch Mischung von mindestens 3 Komponenten in Form
1) reaktiver Feststoffe, die SiO₂ und Al₂O₃ in ausreichender Menge und reaktiver Form enthalten (Aschen, Aktivtone, Metakaolin. Puzzolane, Schlacken etc.),
2) einer alkalischen Aktivierungslösung, die (neben Wasser) einzeln oder in Kombination Alkalihydroxide, -silikate, -aluminate, -carbonate und -sulfate beinhaltet, und
3) einer porenbildenden Komponente (Schaumzugabe, Gasbildungsreaktion mit Aluminiumpulver oder Wasserstoffperoxid).

### [A. Buchwald: What are geopolymers? Current state of research and technology, the opportunities they offer, and their significance for the precast industry. BFT International 72, Nr. 7, 2006, 42-49]

U.S. Patent 3,396,112 beschreibt ein Verfahren zur Bildung von anorganischem Schaum durch Reaktion von Wasser mit einem Teilchengemisch aus Aluminium und einem trockenen, wasserlöslichen Alkalimetallsilikat, wobei das Teilchengemisch eine Teilchengröße kleiner 10 mesh (2 mm) aufweist, und der Wasseranteil am Gesamtgemisch 30 bis 75 Gew.-% beträgt. Das Gewichtsverhältnis von Alkalimetallsilikat zu Aluminium beträgt 15 : 1 bis 1 : 9, und das Alkalimetallsilikat hat ein Verhältnis von Alkalimetalloxid zu Siliziumoxid von 2 : 1 bis 1 : 4. Gemäß der Beschreibung zu diesem Patent (Spalte 2, Zeilen 55-58) können handelsübliche Aluminiumpulver oder andere Formen von feinverteiltem Aluminium mit der entsprechenden Teilchengröße verwendet werden, wobei es nicht erforderlich ist, dass das Aluminium in reiner Form vorliegt. Der Schaummischung können auch inerte Füllstoffe, wie Siliziumoxid, Aluminiumoxid, Titanoxid und ähnliche Metalloxide zugegeben werden (Spalte 3, Zeilen 8-11). Gemäß Beispiel 1 dieses Patents wurde ein Schaumprodukt erzeugt, indem in ein vorgefertigtes trockenes Gemisch aus 10 g Aluminiumpulver (Teilchengröße kleiner als 400 mesh) und 7,5 g festem Natriumsilikat (Molverhältnis Na₂O : SiO₂ von 1 : 3,22 und 17 Gew.-% Hydratwasser enthaltend) 12,5 g Wasser eingerührt wurden, wobei die Entwicklung von Wasserstoff und die damit verbundene Schaumbildung nach 15 sec begann, und die Mischung nach einigen Minuten verfestigte, verbunden mit einem Temperaturanstieg auf 105 °C. Gemäß Beispiel 2 dieses Patents wird eine trockene Mischung beschrieben von 30 g einer Aluminiumkrätze (mit 70 % Metallgehalt und einer Teilchengröße von etwa 100 mesh) und 70 g eines Natriumsilikats (Teilchengröße etwa 200 mesh, Molverhältnis Na₂O SiO₂ von 1 : 2, ohne Hydratwasser), der 60 g Wasser zugefügt wurde, wobei sich ein Schaum innerhalb von 30 Minuten bildete, der anschließend 3 Stunden bei 110 °C getrocknet und gehärtet wurde.

U.S. Patent 3,784,385 betrifft die Herstellung eines feuerfesten Gasbetons mit einer Temperaturbeständigkeit bis zu 1.200 °C, bestehend aus 5 Komponenten:
1) einem Binder der Natriumsilikat enthält,
2) einem fein gemahlenen Füllstoff in Form einer Chrom-Aluminium-Schlacke, in einem Gewichtsanteil von 22 - 32 % bezogen auf das Gesamtgewicht bei Mischung mit diesem Binder unter
3) Zugabe von Wasser,
4) einem fein gemahlenen feuerfesten Material mit hohem Gehalt an Aluminiumoxid, und
5) einem gasbildenden Mittel in Form von Natriumhydroxid und Aluminium-Pulver. Gemäß der Beschreibung zu diesem Patent (Spalte 2, Zeile 67 bis Spalte 3, Zeile 16) wird die Mischung 3 - 5 Stunden bei 38 - 42 °C erhitzt, weitere 10 Stunden in einem Autoklaven bei 170 - 180 °C behandelt, und schließlich noch 3 Tage bei 20 °C gelagert.

U.S. Patent 4,133,691 beschreibt ein Verfahren zur Herstellung von anorganischem Schaum mit einem Molverhältnis von SiO₂ : Al₂O₃ von 1 : 1 bis 10 : 1, wobei teilchenförmiges, metallisches Aluminium mit einer wässrigen basischen Lösung vermischt wird, die aus wasserlöslichem Alkalimetalloxid, Alkalimetallhydroxid oder Alkalimetallaluminat gebildet wird.

EP 1 180 504 B1 betrifft einen porosierenden, erstärrungsbeschleunigenden Bindemittelbaustoffzusatz, enthaltend 50 - 90 % Al₂O₃, 4 - 20 % MgO, 0,5 - 15 % SiO₂, 0,1 - 5 % Aluminiumnitrid, 0,1 - 10 % metallisches Aluminium, 0,1 - 15 % Glühverlust, und die mineralischen Hauptbestandteile in Form von Korund (α-Al₂O₃) und Spinell (MgO • Al₂O₃), wobei die metallischen Aluminiumteilchen von mineralischen Übergangsmodifikationen von Aluminiumhydroxyd (Al₂O₃ • 3 H₂O zu α-Al₂O₃ umhüllt sind, und das Pulver eine Teilchengröße von mindestens 90 % kleiner 500 *µ*m sowie eine spezifische Oberfläche von mindestens 10 m²/g aufweist. Dieser Zusatzstoff wird aus einem Rückstand der Aufbereitung von Aluminiumsalzschlacke hergestellt, durch thermische Entwässerung und Aktivierung im Temperaturbereich zwischen 400 und 1.000 °C. Dem Beispiel 5, Versuch 6, dieses Patents zufolge wurden 450 g "SEROX TK750" (bei 750 °C thermisch aktiviertes Pulver, mit einer spezifischen Oberfläche von 45 m²/g und einem Gehalt an metallischem Aluminium von 3 %) mit 400 g flüssigem Wasserglas ca. 1 min gemischt. Nach wenigen Minuten trat eine Gasentwicklung im Brei ein, die zu einer Schaumbildung und Volumenzunahme führte, verbunden mit einer Erwärmung auf 76 °C. Nach einer Reaktionszeit von 10 min war der Körper mechanisch stabil erhärtet, und hatte eine Rohdichte von 0,63 g/cm³.

EP 0 576 254 A2 betrifft ein reaktives nicht-metallisches Produkt mit 7 - 25 % Aluminiumnitrid und 2 - 8 % Aluminium, das durch Aufbereitung von Aluminiumkrätze und Aluminiumsalzschlacke durch Auswaschen der Chloride gewonnen wird (Seite 2, Zeilen 53 - 55). Eine mögliche Verwendung dieses Produkts zur Herstellung von feuerfesten Erzeugnissen oder Schleifmitteln wird beschrieben, nicht jedoch zur Bildung von anorganischem Schaum.

Aus der Aufbereitung von Aluminiumkrätze mit Metallgehalten von 40 - 75 % mittels Plasmaverfahren (siehe U.S. Patent 4,960,460 A) ist das reaktive Pulver "NOVAL" bekannt, das 53 - 65 % Aluminiumoxid, 9 - 20 % Aluminiumnitrid und 5 - 12 % metallisches Aluminium enthält. Die Verwendbarkeit von "NOVAL" zur Herstellung von Calciumaluminat, Natriumaluminat, Magnesiumaluminat-Spinell, Schmelzkorund, Mineralfasern, als Zementzusatz und als Sandstrahlmedium wird beschrieben, nicht jedoch eine mögliche Eignung zur Bildung von anorganischem Schaum.

### [R. Breault, S.P. Tremblay, J. Lachance, Y. Huard: Market Opportunities for the ALCAN Plasma Dross Residues. Light Metals (1995) 823-827]

### [R. Breault, D. Guay, G.Dubé, D.Legault, R.Morin, K. Annett, J. Bonneau: Aluminium Plasma Dross Treatment Process and Calcium Aluminate Production: Closing the loop with no residue. Light Metals (2000) 1183-1194]

EP 1 440 937 A1, U.S. Patent 4,814,300 und WO 2005/012207 A2 beschreiben weitere Zusammensetzungen enthaltend Wasserglas, Aluminiumoxid und Aluminiumnitrid in verschiedene Mengen.

Aufgabe der Erfindung ist die Bereitstellung eines Verfahrens zur Bildung eines schnell erhärtenden, anorganischen Schaums, der auf Basis einer Reaktion von nur 2 Komponenten in weniger als 10 Minuten zu einem stabilen Schaumkörper erhärtet, wobei zur Erhärtung keine externe Wärmezufuhr benötigt wird und wobei der Schaumkörper auch nicht getrocknet werden muss. Außerdem soll der Mineralschaum Bestandteile enthalten, die eine hohe Feuerbeständigkeit bieten. Eine weitere Aufgabe der vorliegenden Erfindung umfasst die Zurverfügungstellung eines reaktiven Pulvers zur Bildung eines schnell erhärtenden, anorganischen Schaums.

Diese Aufgabe wird gelöst durch ein Verfahren gemäß Anspruch 1, durch ein reaktives Pulver gemäß Anspruch 11, durch die Verwendung eines aus Aluminiumkrätze gewonnenen Pulvers gemäß Anspruch 16, sowie durch anorganische Schäume oder Leichtbaustoffe gemäß Anspruch 21. Weitere vorteilhafte Ausgestaltungen der Erfindung sind in den abhängigen Ansprüchen 2 - 10, 12 - 15, 17 - 20 und 22 angegeben.

Da für die Erhärtung des anorganischen Schaums im allgemeinen keine Wärmezufuhr von außen benötigt wird, kann das erfindungsgemäße Verfahren vorzugsweise bei Raumtemperatur durchgeführt werden; diese liegt im allgemeinen im Bereich von 15°C bis 30 °C, insbesondere bei 18 °C bis 25 °C.

Nach dem Stand der Technik wird bei der Bildung eines anorganischen Schaums immer nur die Wirkung von metallischem Aluminium als gasbildende Komponente in Betracht gezogen. Überraschenderweise wurde gefunden, dass sich mit einem reaktiven Pulver mit den Hauptbestandteilen 45 - 65 Gew.-% Aluminiumoxid, 10 - 20 Gew.-% Aluminiumnitrid und 5 - 15 Gew.-% metallisches Aluminium, bei dem vorzugsweise der Mengenanteil an Aluminiumnitrid größer ist als der Anteil an metallischem Aluminium, in Reaktion mit flüssigem Alkalimetallsilikat bereits innerhalb von weniger als 10 Minuten ein stabiler Mineralschaumkörper mit einer Rohdichte von weniger als 0,7 g/cm³ bilden lässt, und dass dieser Schaumkörper auch keine weitere Trocknung benötigt. Außerdem ist der hohe Aluminiumoxidgehalt dieses Pulver vorteilhaft für eine hohe Feuerbeständigkeit des anorganischen Schaums. Mittels Röntgenbeugungsanalyse zeigt sich, dass die mineralische Zusammensetzung der gebildeten Schaumkörper noch restliches unreagiertes metallisches Aluminium aufweist, während dagegen Aluminiumnitrid nicht mehr festzustellen ist, das Aluminiumnitrid somit praktisch vollständig reagiert hat.

Dieser Befund war insofern unerwartet, als gemäß U.S. 3,396,112, Beispiel 1, mit reinem Aluminiumpulver in Reaktion mit festem Wasserglas und Zugabe von Wasser die Schaumbildung und Verfestigung zwar bereits nach wenigen Minuten erfolgte, gemäß U.S. 3,396,112, Beispiel 2, bei Verwendung einer Aluminiumkrätze mit einem Metallgehalt von noch 70 Gew.-% die Schaumbildung jedoch schon 30 Minuten dauerte.

Die schnelle Gasbildung und Schaumverfestigung, die bei Verwendung des erfindungsgemäßen gleichzeitig gerüstbildenden und porenbildenden Pulvers in Reaktion mit einem flüssigen Alkalimetallsilikat gefunden wurde, beruht vermutlich auf der zusätzlich zum gebildeten Wasserstoff-Gas (aus der Reaktion 2 Al + 4 H₂O => 2 AlOOH + 3 H₂) erfolgenden Freisetzung von Ammoniak-Gas (aus der Reaktion AlN + 2 H₂O => AlOOH + NH₃) und der damit verbundenen zusätzlichen Bildung von aktivem Aluminiumhydroxid-Gel, welches die Gerüstbildung durch Polymerisation und Konsolidierung des Alkalimetallsilikats in der Art eines Geopolymers besonders beschleunigt.

Ein erfindungsgemäßes Pulver, das sowohl gerüstbildende als auch gasbildende Eigenschaften besitzt, kann beispielsweise bei der Rückgewinnung von Aluminium aus Aluminiumkrätze mittels mechanischer Zerkleinerung und Klassierung in Form der an Aluminium ärmsten Feinkornfraktionen kleiner als 1 mm gewonnen werden, z.B. als Siebdurchgang "CAI-ALON S-D" und auch als Filterstaub "CAI-ALON B-H" (Hersteller: CAST ALUMINIUM INDUSTRIES, Dubai, Vereinigte Arabische Emirate; Tabelle 1). Wie aus Tabelle 1 ersichtlich, weisen diese erfindungsgemäßen Pulver eine BET-Oberfläche von 2,2 bzw. 3,4 m²/g auf.

Wie vorstehend erwähnt, kann als erfindungsgemäßes reaktives Pulver ein aus Aluminiumkrätze gewonnenes Pulver verwendet werden, vorzugsweise ein mittels mechanischer Zerkleinerung und Klassierung (insbesondere durch Sieben, Filtration oder Windsichtung) aus Aluminiumkrätze gewonnenes Pulver.

Als im Sinne der Erfindung geeignet sind auch andere reaktive Pulver anzusehen, wenn sie die erfindungsgemäßen Eigenschaftsmerkmale aufweisen, wie beispielsweise das nach U.S. Patent 4,960,460 gewonnene "NOVAL" oder das nicht-metallische Produkt nach EP 0 576 254 A2.

Die BET-Oberfläche (spezifische Oberfläche) des erfindungsgemäßen reaktiven Pulvers ist vorzugsweise kleiner als 10 m²/g, besonders bevorzugt kleiner als 7,5 m²/g, insbesondere kleiner als 5 m²/g. Die BET-Oberfläche wird nach ISO 9277 (1995), die die DIN 66131 ersetzt, ermittelt (ISO 9277:1995; "Bestimmung der spezifischen Oberfläche von Feststoffen durch Gasadsorption nach dem BET-Verfahren").

Das reaktive Pulver und die alkalische Aktivierungslösung können selbstverständlich auch in Kombination mit weiteren mineralischen Rohstoffen verwendet werden, wie Metakaolin, Flugasche, Schlacke, Puzzolan, Zement, Kalk, Gips, Sand, Glasfasern, Mineralfasern, unter gegebenenfalls Zugabe von so viel weiterer alkalischer Aktivierungslösung oder Wasser, wie zur Einstellung einer pastösen Konsistenz der Mischung erforderlich ist.

Die vorliegende Erfindung bezieht sich ferner auf einen anorganischen Schaum oder Leichtbaustoff, der mit dem erfindungsgemäßen Verfahren herstellbar ist oder hergestellt wurde. Insbesondere handelt es sich dabei um einen thermisch isolierenden oder/und feuerbeständigen Leichtbaustoff.
Der erfindungsgemäße anorganische Schaum oder Leichtbaustoff kann auch in Form von daraus hergestellten Fertigteilen, insbesondere Isolierplatten, vorliegen.

In den folgenden Beispielen 1-6 (Tabelle 3) wurden die reaktiven Pulver "CAI-ALON S-D" und "CAI-ALON B-H" mit einer alkalischen Aktivierungslösung auf Basis von Kalium-Wasserglas "SILIRIT M 110" (Tabelle 2) in Mengenverhältnissen von Pulver zu Wasserglas von 0,6 - 2 in einem Plastikbecher bei Raumtemperatur etwa 30 Sekunden durch Umrühren mit einem Löffel zu einer Paste gemischt. Zur Messung der Reaktionstemperatur wurde ein Thermometer in die Paste gesetzt. Nach der erfolgten Schaumbildung und Verfestigung des geschäumten Körpers wurde dessen Rohdichte durch Wiegung und durch Messung der Umrisse ermittelt.

Wie die Ergebnisse zeigen, war bei den Beispielen 1 - 3 die Konsistenz der Paste gut streichfähig, und die Schaumbildung, die Verfestigung des Schaums und die Rohdichte des Schaums waren am besten, also bei Mischungsverhältnissen von Feststoff zu Aktivierungslösung im Gewichtsverhältnis von 1 : 1. Die Konsistenz der Pasten in den Beispielen 4 und 6 war relativ dünn, und im Beispiel 5 relativ dick, so dass Mischungsfaktoren von Feststoff zu Aktivierungslösung im Bereich von 0,5 - 2 als am besten geeignet zu betrachten sind im Hinblick auf eine möglichst schnelle Bildung eines anorganischen Schaums mit möglichst geringer Rohdichte. Mittels Röntgenbeugungsanalyse zeigte sich, dass in der mineralischen Zusammensetzung der gebildeten Schaumkörper noch ein Restanteil von metallischem Aluminium festzustellen war, jedoch kein Aluminiumnitrid, das Aluminiumnitrid im Unterschied zu dem metallischen Aluminium somit praktisch vollständig reagiert hat.

**Tabelle 1: Reaktive Pulver**

| | CAI-ALON S-D Siebdurchgang | | CAI-ALON B-H Filterstaub |
|---|---|---|---|
| Al₂O₃ | [%] | 49.9 | 54.9 |
| AlN | [%] | 12.6 | 15.0 |
| Al Metall | [%] | 10.9 | 13.7 |
| SiO₂ | [%] | 9.6 | 5.3 |
| MgO | [%] | 4.9 | 5.3 |
| CaO | [%] | 3.3 | 1.4 |
| Na₂O | [%] | 0.8 | 0.4 |
| K₂O | [%] | 0.6 | 0.9 |
| Fe₂O₃ | [%] | 0.4 | 0.4 |
| TiO₂ | [%] | 0.5 | 0.3 |
| F | [%] | 0.7 | 2.0 |
| | | | |
| Cl | [%] | 1.3 | 0.5 |
| N | [%] | 4.3 | 5.1 |
| C | [%] | 0.7 | 0.2 |
| Feuchte 105 °C | [%] | 0.1 | 0.1 |
| Gewichtsveränderung 1100 °C | [%] | +7.7 | +14.5 |
| spez. Oberfläche* | | [m²/g] 2.2 | 3.4 |
| Teilchen <300 µm | [%] | 90 | 99 |
| Mineralische Hauptbestandteile | | | |
| Korund | | +++ | +++ |
| Spinell | | ++ | ++ |
| Aluminiumnitrid | | ++ | ++ |
| Aluminium Metall | | ++ | ++ |
| Quarz | | + | + |

| | | | |
|---|---|---|---|
| *BET-Oberfläche; Bestimmung mittels BET-Verfahren (ISO 9277). | | | |

**Tabelle 2: Alkalisches Wasserglas**

| | | |
|---|---|---|
| Type: | SILIRIT M 110 | |
| Hersteller: | Cognis GmbH, D-40551 Düsseldorf / Deutschland | |
| Dichte | [kg/cm³] (20 °C) | 1600 - 1700 |
| Viskosität | [mPas] (20 °C) | 40 - 80 |
| K₂O | [%] | 27.80 - 31.00 |
| SiO₂ | [%] | 22.20 - 23.00 |
| Gewichtsverhältnis | [% SiO₂ / % K₂O] | 0.74 - 0.80 |
| Molverhältnis | [Mol SiO₂ / Mol K₂O] | 1.16 - 1.26 |

**Tabelle 3: Beispiele**

| Beispiele | | 1 | 2 | 3 | 4 | 5 | 6 |
|---|---|---|---|---|---|---|---|
| CAI-ALON S-D | [g] | 20 | - | 10 | 15 | 25 | 10 |
| CAI-ALON B-H | [g] | - | 20 | 10 | - | - | 10 |
| SILIRIT M110 | [g] | 20 | 20 | 20 | 25 | 15 | 10 |
| Wasser | [g] | - | - | - | - | - | 10 |
| Mischungsfaktor | | | | | | | |
| Feststoff: Wasserglas | | 1 | 1 | 1 | 0,6 | 1, 66 | 2 |
| Konsistenz der Paste | | a) | a) | a) | b) | c) | b) |
| Beginn der Reaktion | [min] | 1 | 1 | 1 | 1 | 1 | 4 |
| Maximale Temperatur | [°C] | 126 | 132 | 126 | 130 | 110 | 93 |
| Verfestigung. | [min] | 5 | 5 | 5 | 6 | 3 | 7 |
| Rohdichte | [g/cm³] | 0,37 | 0,38 | 0, 37 | 0,43 | 0,67 | 0,57 |

| | | | | | | | |
|---|---|---|---|---|---|---|---|
| a) gut streichfähig b) relativ dünn c) relativ dick | | | | | | | |

## Patentansprüche

1. Verfahren zur Bildung eines schnell erhärtenden, anorganischen Schaums, basierend auf der Reaktion von 2 Komponenten:
a) einer festen Komponente in Form eines reaktiven Pulvers, das gleichzeitig sowohl gerüstbildende als auch porenbildende Eigenschaften hat, und
b) einer flüssigen Komponente in Form eines Alkalimetallsilikats (Wasserglas), welche als alkalische Aktivierungslösung dient, **dadurch gekennzeichnet,**
**dass** das reaktive Pulver als wesentliche Bestandteile
45 - 65 Gew.-% Aluminiumoxid,
10 - 20 Gew.-% Aluminiumnitrid und
5 - 15 Gew.-% metallisches Aluminium, und
eine Teilchengröße von mindestens 90 Gew.-% kleiner als 1 mm aufweist, und die beiden Komponenten im Gewichtsverhältnis von Pulver zu flüssiger Komponente von 0,5 - 2 zu einer Paste gemischt werden, aus der sich dann in einer exothermen Reaktion in weniger als 10 Minuten ein Schaumkörper mit einer Rohdichte von weniger als 0,7 g/cm³ bildet.

2. Verfahren nach Anspruch 1, **dadurch gekennzeichnet, dass** die Komponenten maximal 5 Minuten lang, vorzugsweise maximal 1 Minute lang gemischt werden.

3. Verfahren nach Anspruch 1 oder 2, **dadurch gekennzeichnet, dass** die Komponenten ohne externe Wärmezufuhr, vorzugsweise bei Raumtemperatur, zu einer Paste gemischt werden.

4. Verfahren nach einem der Ansprüche 1 bis 3, **dadurch gekennzeichnet, dass** die alkalische Aktivierungslösung eine Alkalimetallsilikatlösung ist mit einem Molverhältnis Siliziumoxid zu Metalloxid von 1,0 - 2,2.

5. Verfahren nach einem der vorhergehenden Ansprüche, **dadurch gekennzeichnet, dass** das reaktive Pulver ein Gewichtsverhältnis von Aluminumnitrid zu metallischem Aluminium von größer als 1 aufweist.

6. Verfahren nach einem der vorhergehenden Ansprüche, **dadurch gekennzeichnet, dass** das reaktive Pulver eine Teilchengröße von mindestens 90 Gew.-% kleiner als 300 µm besitzt.

7. Verfahren nach einem der vorhergehenden Ansprüche, **dadurch gekennzeichnet, dass** das reaktive Pulver mit einem flüssigen Kaliumwasserglas gemischt wird, das ein Molverhältnis (SiO₂ : K₂O von 1,16 - 1,26 hat.

8. Verfahren nach einem der vorhergehenden Ansprüche, **dadurch gekennzeichnet, dass** das reaktive Pulver und die alkalische Aktivierungslösung in Kombination mit weiteren mineralischen Rohstoffen verwendet werden, wie Metakaolin, Flugasche, Schlacke, Puzzolan, Zement, Kalk, Gips, Sand, Glasfasern, Mineralfasern, und gegebenenfalls Zugabe von so viel weiterer alkalischer Aktivierungslösung oder Wasser, wie zur Einstellung einer pastösen Konsistenz der Mischung erforderlich ist.

9. Verfahren nach einem der vorhergehenden Ansprüche, **dadurch gekennzeichnet, dass** die BET-Oberfläche des reaktiven Pulvers weniger als 10 m²/g, vorzugsweise weniger als 7,5 m²/g, besonders bevorzugt weniger als 5 m²/g beträgt.

10. Verfahren nach einem der vorhergehenden Ansprüche, **dadurch gekennzeichnet, dass** als reaktives Pulver ein aus Aluminiumkrätze gewonnenes Pulver verwendet wird, vorzugsweise ein mittels mechanischer Zerkleinerung und Klassierung aus Aluminiumkrätze gewonnenes Pulver.

11. Reaktives Pulver zur Bildung eines schnell erhärtenden Mineralschaums durch Reaktion mit einer alkalischen Aktivierungslösung, **dadurch gekennzeichnet, dass** das reaktive Pulver als wesentliche Bestandteile
45 - 65 Gew.-% Aluminiumoxid,
10 - 20 Gew.-% Aluminiumnitrid und
5 - 15 Gew.-% metallisches Aluminium, und
eine Teilchengröße von mindestens 90 Gew.-% kleiner als 1 mm aufweist.

12. Reaktives Pulver nach Anspruch 11, **dadurch gekennzeichnet, dass** das Gewichtsverhältnis von Aluminumnitrid zu metallischem Aluminium größer als 1 ist.

13. Reaktives Pulver nach Anspruch 11 oder 12, **dadurch gekennzeichnet, dass** die Teilchengröße mindestens 90 Gew.-% kleiner als 300 µm beträgt.

14. Reaktives Pulver nach einem der Ansprüche 11 bis 13, **dadurch gekennzeichnet, dass** die BET-Oberfläche des reaktiven Pulvers kleiner als 10 m²/g, vorzugsweise kleiner als 7,5 m²/g, besonders bevorzugt kleiner als 5 m²/g ist.

15. Reaktives Pulver nach einem der Ansprüche 11 bis 14, **dadurch gekennzeichnet, dass** es aus Aluminiumkrätze gewonnen wurde, vorzugsweise mittels mechanischer Zerkleinerung und Klassierung.

16. Verwendung eines aus Aluminiumkrätze gewonnenen Pulvers, das als wesentliche Bestandteile
45 - 65 Gew.-% Aluminiumoxid,
10 - 20 Gew.-% Aluminiumnitrid und
5 - 15 Gew.-% metallisches Aluminium
enthält,
als reaktives Pulver zur Bildung eines anorganischen Schaums, insbesondere eines Leichtbaustoffs.

17. Verwendung nach Anspruch 16, **dadurch gekennzeichnet, dass** mindestens 90 Gew.-% des Pulvers eine Teilchengröße von kleiner als 1 mm, vorzugsweise von kleiner als 300 µm aufweisen.

18. Verwendung nach Anspruch 16 oder 17, **dadurch gekennzeichnet, dass** das reaktive Pulver zur Bildung des anorganischen Schaums mit einer flüssigen Komponente in Form eines Alkalimetallsilikats zur Reaktion gebracht wird.

19. Verwendung nach einem der Ansprüche 16 bis 18, **dadurch gekennzeichnet, dass** das Gewichtsverhältnis von Aluminumnitrid zu metallischem Aluminium im Pulver größer als 1 ist.

20. Verwendung nach einem der Ansprüche 16 bis 18, **dadurch gekennzeichnet, dass** die BET-Oberfläche des reaktiven Pulvers kleiner als 10 m²/g, vorzugsweise kleiner als 7,5 m²/g, besonders bevorzugt kleiner als 5 m²/g ist.

21. Anorganischer Schaum oder Leichtbaustoff, erhältlich durch ein Verfahren nach einem der Ansprüche 1 bis 10, vorzugsweise ein thermisch isolierender oder/und feuerbeständiger Leichtbaustoff.

22. Anorganischer Schaum oder Leichtbaustoff nach Anspruch 21, **dadurch gekennzeichnet, dass** er in Form von Fertigteilen, insbesondere Isolierplatten, vorliegt.

## Claims

1. A process of forming a rapid-hardening inorganic foam based on the reaction of 2 components:
a) a solid component in the form of a reactive powder with at the same time structure-building and pore-forming properties, and
b) a liquid component in the form of an alkali metal silicate (waterglass), which component serves as an alkaline activation solution, **characterised in that**
the reactive powder comprises the essential constituents:
45 - 65% by weight aluminium oxide,
10 - 20% by weight aluminium nitride, and
5 - 15% by weight metallic aluminium, and
has a particle size of at least 90% by weight smaller than 1 mm, and the two components are mixed in a weight ratio of powder to liquid component of 0.5 to 2 to give a paste from which a foamed body with a bulk density of less than 0.7 g/cm³ then forms in an exothermal reaction within less than 10 minutes.

2. The process in accordance with claim 1, **characterised in that** the components are mixed for maximum 5 minutes, preferably maximum 1 minute.

3. The process in accordance with claim 1 or 2, **characterised in that** the components are mixed without the supply of heat from the outside, preferably at room temperature, to give a paste.

4. The process in accordance with any one of claims 1 to 3, **characterised in that** the alkaline activation solution is an alkali metal silicate solution having a molar ratio of silicon oxide to metal oxide of 1.0 to 2.2.

5. The process in accordance with any one of the preceding claims, **characterised in that** the reactive powder has a weight ratio of aluminium nitride to metallic aluminium of greater than 1.

6. The process in accordance with any one of the preceding claims, **characterised in that** the reactive powder has a particle size of at least 90% by weight smaller than 300 µm.

7. The process in accordance with any one of the preceding claims, **characterised in that** the reactive powder is mixed with a liquid potassium water glass, having a molar ratio (SiO₂ : K₂O) of 1.16 to 1.26.

8. The process in accordance with any one of the preceding claims, **characterised in that** the reactive powder and the alkaline activation solution are used in combination with other mineral raw materials, such as metakaolin, fly ash, slag, pozzolan, cement, lime, gypsum, sand, glass fibers, mineral fibers, and that, if necessary, further alkaline activation solution or water is added in a quantity necessary for adjusting a pasty consistency of the mixture.

9. The process in accordance with any one of the preceding claims, **characterised in that** the BET surface area of the reactive powder is smaller than 10 m²/g, preferably smaller than 7.5 m²/g, more preferably smaller than 5 m²/g.

10. The process in accordance with any one of the preceding claims, **characterised in that** as the reactive powder a powder is used which has been recovered from aluminium dross, preferably a powder recovered from aluminium dross by mechanical size reduction and classification.

11. A reactive powder for the forming of a rapid-hardening mineral foam by reaction with an alkaline activation solution, **characterised in that** said reactive powder comprises the essential constituents:
45 - 65% by weight aluminium oxide,
10 - 20% by weight aluminium nitride, and
5 - 15% by weight metallic aluminium, and
has a particle size of at least 90% by weight smaller than 1 mm.

12. The reactive powder in accordance with claim 11, **characterised in that** the weight ratio of aluminium nitride to metallic aluminium is greater than 1.

13. The reactive powder in accordance with claim 11 or 12, **characterised in that** the particle size is at least 90% by weight smaller than 300 µm.

14. The reactive powder in accordance with any one of claims 11 to 13, **characterised in that** the BET surface area of the reactive powder is smaller than 10 m²/g, preferably smaller than 7.5 m²/g, more preferably smaller than 5 m²/g.

15. The reactive powder in accordance with any one of claims 11 to 14, **characterised in that** it has been recovered from aluminium dross, preferably by mechanical size reduction and classification.

16. Use of a powder which has been recovered from aluminium dross and which contains the essential constituents
45 - 65% by weight aluminium oxide,
10 - 20% by weight aluminium nitride, and
5 - 15% by weight metallic aluminium,
as a reactive powder for the forming of an inorganic foam, particularly a lightweight construction material.

17. The use according to claim 16, **characterised in that** at least 90% by weight of the powder has a particle size of less than 1 mm, preferably less than 300 µm.

18. The use according to claim 16 or 17, **characterised in that** the reactive powder is reacted with a liquid component in the form of an alkali metal silicate, to form the inorganic foam.

19. The use according to any one of claims 16 to 18, **characterised in that** the weight ratio of aluminium nitride to metallic aluminium in the powder is greater than 1.

20. The use according to any one of claims 16 to 18, **characterised in that** the BET surface area of the reactive powder is smaller than 10 m²/g, preferably smaller than 7.5 m²/g, more preferably smaller than 5 m²/g.

21. Inorganic foam or lightweight construction material which can be obtained by a process according to any one of claims 1 to 10, preferably a thermally insulating or/and fire-resistant lightweight construction material.

22. The inorganic foam or lightweight construction material according to claim 21, **characterised in that** it is present in the form of finished parts, particularly in the form of insulating boards.

## Revendications

1. Procédé pour la formation d'une mousse inorganique, durcissant rapidement, basé sur la réaction de 2 composants :
a) un composant solide sous forme d'une poudre réactive, qui présente, simultanément, tant des propriétés de formation de support que des propriétés de formation de pores et
b) un composant liquide sous forme d'un silicate de métal alcalin (verre soluble), qui sert de solution d'activation alcaline, **caractérisé en ce que** la poudre réactive présente, comme constituants essentiels,
45-65% en poids d'oxyde d'aluminium,
10-20% en poids de nitrure d'aluminium et
5-15% en poids d'aluminium métallique, et
présente une granulométrie d'au moins 90% en poids inférieurs à 1 mm, et les deux composants sont mélangés, dans un rapport pondéral de poudre à composant liquide, de 0,5-2, en une pâte à partir de laquelle se forme alors, dans une réaction exothermique, en moins de 10 minutes, un corps de mousse présentant une densité apparente inférieure à 0,7 g/cm³.

2. Procédé selon la revendication 1, **caractérisé en ce que** les composants sont mélangés pendant au maximum 5 minutes, de préférence pendant au maximum 1 minute.

3. Procédé selon la revendication 1 ou 2, **caractérisé en ce que** les composants sont mélangés en une pâte sans apport thermique externe, de préférence à température ambiante.

4. Procédé selon l'une quelconque des revendications 1 à 3, **caractérisé en ce que** la solution d'activation alcaline est une solution de silicate de métal alcalin présentant un rapport molaire oxyde de silicium à oxyde de métal de 1,0-2,2.

5. Procédé selon l'une quelconque des revendications précédentes, **caractérisé en ce que** la poudre réactive présente un rapport pondéral de nitrure d'aluminium à aluminium métallique supérieur à 1.

6. Procédé selon l'une quelconque des revendications précédentes, **caractérisé en ce que** la poudre réactive présente une granulométrie d'au moins 90% en poids inférieurs à 300 µm.

7. Procédé selon l'une quelconque des revendications précédentes, **caractérisé en ce que** la poudre réactive est mélangée avec un verre soluble potassique liquide qui présente un rapport molaire (SiO₂:K₂O) de 1,16-1,26.

8. Procédé selon l'une quelconque des revendications précédentes, **caractérisé en ce que** la poudre réactive et la solution d'activation alcaline sont utilisées en combinaison avec d'autres matières premières minérales, telles que du métakaolin, des cendres volantes, des scories, du pouzzolane, du ciment, de la chaux, du plâtre, du sable, des fibres de verre, des fibres minérales et, le cas échéant, avec addition d'une quantité de solution d'activation alcaline ou d'eau supplémentaire nécessaire pour le réglage d'une consistance pâteuse du mélange.

9. Procédé selon l'une quelconque des revendications précédentes, **caractérisé en ce que** la surface BET de la poudre réactive est inférieure à 10 m²/g, de préférence inférieure à 7,5 m²/g, de manière particulièrement préférée inférieure à 5 m²/g.

10. Procédé selon l'une quelconque des revendications précédentes, **caractérisé en ce qu'**on utilise, comme poudre réactive, une poudre obtenue à partir de crasses d'aluminium, de préférence une poudre obtenue par broyage mécanique et classification de crasses d'aluminium.

11. Poudre réactive pour la formation d'une mousse minérale durcissant rapidement par réaction avec une solution d'activation alcaline, **caractérisée en ce que** la poudre réactive présente, comme constituants essentiels,
45-65% en poids d'oxyde d'aluminium,
10-20% en poids de nitrure d'aluminium et
5-15% en poids d'aluminium métallique, et
présente une granulométrie d'au moins 90% en poids inférieurs à 1 mm.

12. Poudre réactive selon la revendication 11, **caractérisée en ce que** le rapport pondéral de nitrure d'aluminium à aluminium métallique est supérieur à 1.

13. Poudre réactive selon la revendication 11 ou 12, **caractérisée en ce que** la granulométrie est d'au moins 90% en poids inférieurs à 300 µm.

14. Poudre réactive selon l'une quelconque des revendications 11 à 13, **caractérisée en ce que** la surface BET de la poudre réactive est inférieure à 10 m²/g, de préférence inférieure à 7,5 m²/g, de manière particulièrement préférée inférieure à 5 m²/g.

15. Poudre réactive selon l'une quelconque des revendications 11 à 14, **caractérisée en ce qu'**elle est obtenue à partir de crasses d'aluminium, de préférence par broyage mécanique et classification.

16. Utilisation d'une poudre obtenue à partir de crasses d'aluminium, qui contient, comme constituants essentiels,
45-65% en poids d'oxyde d'aluminium,
10-20% en poids de nitrure d'aluminium et
5-15% en poids d'aluminium métallique,
comme poudre réactive pour la formation d'une mousse inorganique, en particulier d'un matériau de construction léger.

17. Utilisation selon la revendication 16, **caractérisée en ce qu'**au moins 90% en poids de la poudre présentent une grosseur de particule inférieure à 1 mm, de préférence inférieure à 300 µm.

18. Utilisation selon la revendication 16 ou 17, **caractérisée en ce que** la poudre réactive, en vue de la formation de la mousse inorganique, est amenée à réagir avec un composant liquide sous forme d'un silicate de métal alcalin.

19. Utilisation selon l'une quelconque des revendications 16 à 18, **caractérisée en ce que** le rapport pondéral de nitrure d'aluminium à aluminium métallique dans la poudre est supérieur à 1.

20. Utilisation selon l'une quelconque des revendications 16 à 18, **caractérisée en ce que** la surface BET de la poudre réactive est inférieure à 10 m²/g, de préférence inférieure à 7,5 m²/g, de manière particulièrement préférée inférieure à 5 m²/g.

21. Mousse inorganique ou matériau de construction léger, pouvant être obtenu par un procédé selon l'une quelconque des revendications 1 à 10, de préférence matériau de construction léger thermiquement isolant et/ou résistant au feu.

22. Mousse inorganique ou matériau de construction léger selon la revendication 21, **caractérisé en ce qu'**il se trouve sous forme de pièces finies, en particulier sous forme de plaques d'isolation.
